Europäisches Patentamt

European Patent Office

Office européen des brevets

(11) Publication number: **0 181 215 B1**

# EUROPEAN PATENT SPECIFICATION

(45) Date of publication of patent specification: **17.04.91** (51) Int. Cl.⁵: **H04N 7/12, H04N 5/92**

(21) Application number: **85308102.4**

(22) Date of filing: **07.11.85**

(54) Apparatus for detecting motion of television images.

(30) Priority: **07.11.84 JP 234778/84**

(43) Date of publication of application:
**14.05.86 Bulletin 86/20**

(45) Publication of the grant of the patent:
**17.04.91 Bulletin 91/16**

(84) Designated Contracting States:
**AT DE FR GB NL**

(56) References cited:
**WO-A-82/01454**          **CH-A- 481 452**
**DE-A- 2 937 284**       **GB-A- 2 050 752**
**GB-A- 2 116 397**       **US-A- 4 245 248**

(73) Proprietor: **SONY CORPORATION**
**7-35 Kitashinagawa 6-Chome Shinagawa-ku
Tokyo 141(JP)**

(72) Inventor: **Kondo, Tetsujiro c/o Patents Division**
**Sony Corporation 6-7-35 Kitashinagawa
Shinagawa-ku Tokyo 141(JP)**

(74) Representative: **Thomas, Christopher Hugo et al
D Young & Co 10 Staple Inn
London WC1V 7RD(GB)**

Rank Xerox (UK) Business Services

## Description

This invention relates to methods of and apparatus for detecting motion of television images.

It is known that the motion in a television image can be detected by summing the magnitudes of differences in pixel data between a current frame and a previous frame. Such a method is disclosed for example in German patent specification DE-A-2 937 284 (GB-A-2 031 686). A similar method is disclosed in international patent specification WO-A-82/01454.

The detection of large-scale motion of a television image caused by panning or tilting of the television camera is particularly important in cases where the output image data of the television camera are digitized, compressed and transmitted or recorded, and on reception or reproduction are expanded so as to reconstruct the original signal for display. This is because image data compression can severely degrade the image quality if motion occurs between frames. However, if the motion between frames can be accurately measured, it is possible to compensate for this motion, prior to display so maintaining the picture quality.

One method of reducing the transmission band required for a high quality television signal involves transmitting a movement vector indicative of the direction and speed of motion of a television camera, together with the image data. The amount of data is reduced by a factor of four so as to shift the sub-sampling location with a four-field period. On reception, a picture image of one field is reproduced using the data from the period of four fields with respect to a still image, and, in the case where the whole picture is moving in the same direction, as in the case where the television camera pans, the coordinate axis is shifted in accordance with the movement vector and data from the previous frame are read out from a memory, thereby performing the movement correction.

In such movement correction, it is sufficient to use one movement vector for each field. It has, however, been previously proposed to improve the estimation accuracy by dividing an image into four segments, obtaining a plurality of movement vectors for each segment, and subjecting these movement vectors to a majority decision process or a simple arithmetic averaging process, thereby deriving movement vectors for the whole image.

An interframe coding system is disclosed in GB-A-2 052 752 for efficient transmission of coded television signals. In this case picture motion is compensated in response to interframe correlation detected by shifting blocks of picture elements in a direction opposite to a detected motion vector for predicting interframe picture motion in order to reduce the amount of coded information to be transmitted.

To obtain the movement vector in each segment derived by dividing an image into a plurality of segments, a block matching method can be used. As a further simplification, the image can be notionally divided into blocks and a representative point or pixel, for example at the centre of each block, used for a comparison from one frame to the next to determine a frame difference for detection of a movement vector for each block. In other words, the degree of correlation between the magnitudes of the pixel data in successive frames is examined to determine the frame difference. The frame difference is the difference between the pixel (representative point) at the spatial centre of a target block of the previous frame, for instance, and each pixel included in a target block of the current frame. By selecting a block which has the highest correlation with each of the blocks in an adjacent frame, a movement vector of the TV-picture is determined (see e.g. page 4, lines 29-43 of GB-A-2 052 752. A method of this general kind apparently leads to selection of a single motion vector for a frame.

Previously proposed apparatuses for detecting a movement vector of a television camera have the following problems.

Firstly, the reliability of the movement vectors derived from the frame difference summation table of each segment differ in dependence on the nature of the picture in that segment. For example, in a segment having a large amount of low frequency components, such as a sky or a sea, the distribution near the minimum value has a gentle slope in the frame difference summation table and the reliability of the movement vector is low. On the contrary, in a segment having a large amount of high frequency components, such as a fine picture, the distribution is steep and the reliability of the movement vector is high.

Secondly, since the influence of noise and of moving objects within the image in respective segments differs, the accuracy of determining movement vectors in respective segments differs. In practice, in a segment where there is little noise and few moving objects, the frame differences for almost all of the pixels become a minimum at the position of the movement vectors, so that a distribution having a single local minimum value is obtained. On the contrary, in a segment where there is substantial noise and many moving objects, the distribution of the frame differences has a plurality of local minimum values, so that the accuracy of the movement vectors detected in such a segment is low. In previously proposed apparatuses, such influences of noises, moving objects, etc. are not considered.

According to the prevent invention there is provided a method of selecting a movement vector in a video system for transmitting picture data comprising a succession of video frames each formed of a plurality of pixels, the method comprising:

dividing each of said video frames into m video frame segments;

deriving m movement vectors comprising a movement vector for each of m pairs of said video frame segments wherein each of said pairs comprises one of said segments of a current one of the frames and the corresponding one of said segments of a previous one of the frames;

deriving a plurality of frame difference values for each of said pairs by comparing a single pixel of the segment of said previous frame with each pixel in the respective segment in said current frame;

selecting a minimum value of frame difference data for each of said pairs and forming added minimum values by adding said selected minimum value for one of said pairs to a value of the frame difference data at a corresponding location in each of the other ones of said pairs, and performing said step of adding for each one of said pairs to produce m residual deviation values; and

selecting the one of said m movement vectors corresponding to the selected minimum value, subtracting said added minimum values from the minimum value of the m residual deviation values, comparing the subtracted output with a predetermined reference value, and outputting said selected movement vector when said subtracted value is smaller than said predetermined reference value.

According to the present invention there is also provided an apparatus for selecting a movement vector in response to frame difference data between a present frame and a previous frame of a video signal, the apparatus comprising:

means for dividing each frame of said video signal into m video signal area segments;

means for producing frame difference summation data in response to present frame data and previous frame data for each m pairs of said segments wherein each pair comprises one of said segments of said previous frame and the corresponding one of said segments of said present frame;

means responsive to said frame difference summation data for said pairs for producing m respective movement vectors, each of said m movement vectors representing an amount and a direction of movement of an image represented by a respective one of said pairs;

means for forming added minimum values by adding a minimum value of the frame difference data for all of said pairs with a value of the frame difference data at a corresponding location in each of the other ones of said pairs, for each one of said m segments, to produce m residual deviation values;

means for detecting a minimum value of said m residual deviation values; means for selecting the one of said m movement vectors corresponding to said detected minimum residual deviation value; and

a control circuit for controlling output of said one selected movement vector from said apparatus, said control circuit comprising a circuit for subtracting said added minimum values from the minimum value of the m residual deviation values and producing a subtracted output, a comparator for comparing the subtracted output with a predetermined reference value, and a circuit for outputting the selected movement vector when said subtracted output is smaller than said predetermined reference value.

In embodiments of the present invention, the movement vector which makes the frame difference summation data a minimum for the overall image is selected from the movement vectors derived for each of a plurality of segments which are formed by dividing the image of one frame, thereby making it possible to derive the movement vector which can best be applied to the whole image as the movement vector of one frame.

Thus, according to the present invention, instead of averaging four movement vectors for respective segments, one of them is selected on the basis of a special selection process. Therefore, the minimum value of the frame difference summation data and the movement vector of the distribution in which the gradient of the frame difference summation data around this minimum value is steep can be selected as the movement vector for one frame. The amount of hardware required is small compared with an arrangement in which a weighting coefficient which takes into account both the steepness of the distribution and the residual deviation is generated, and a weighted mean is derived on the basis of this weighting coefficient.

The invention will now be described by way of example with reference to the accompanying drawings, in which:

Figure 1 is a block diagram of a selection reference generator and a selecting circuit in one embodiment of the present invention;

Figure 2 is a schematic diagram which is used to explain the selection reference generator of Figure 1;

Figure 3 is a block diagram of one embodiment of the invention; and

Figures 4 and 5 are schematic diagrams which are used to explain the detection of movement vectors.

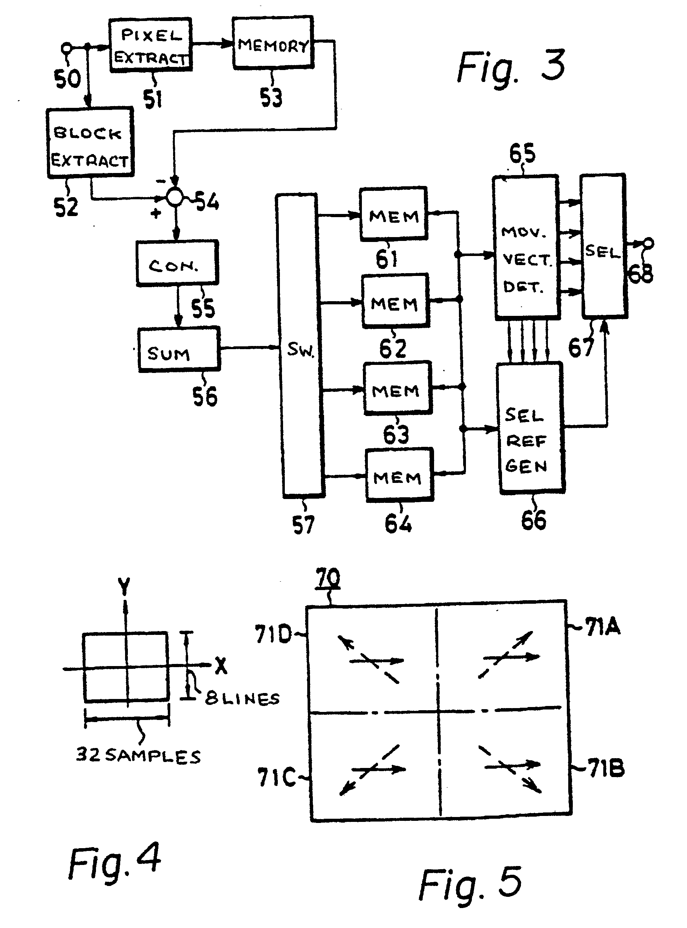

As shown in Figure 5, in an embodiment of the present invention, a movement vector is derived for each of segments 71A to 71D which are formed by, for example, notionally dividing an image of one field 70 into four segments. One of those four movement vectors is then selected as the movement vector for the whole field 70. The selection is determined such that when the four movement vectors are respectively applied to its own segment and to the other three segments, and movement correction is performed, the residual deviation becomes a minimum. The selection determined in this way reflects not only the residual deviation but also the degree of steepness of the gradient of the distribution of the frame difference summation data. When the whole image has been assigned the selected movement vector, verification of the correctness based on the extent of coincidence is performed, thereby determining whether the selected movement vector is to be used or not.

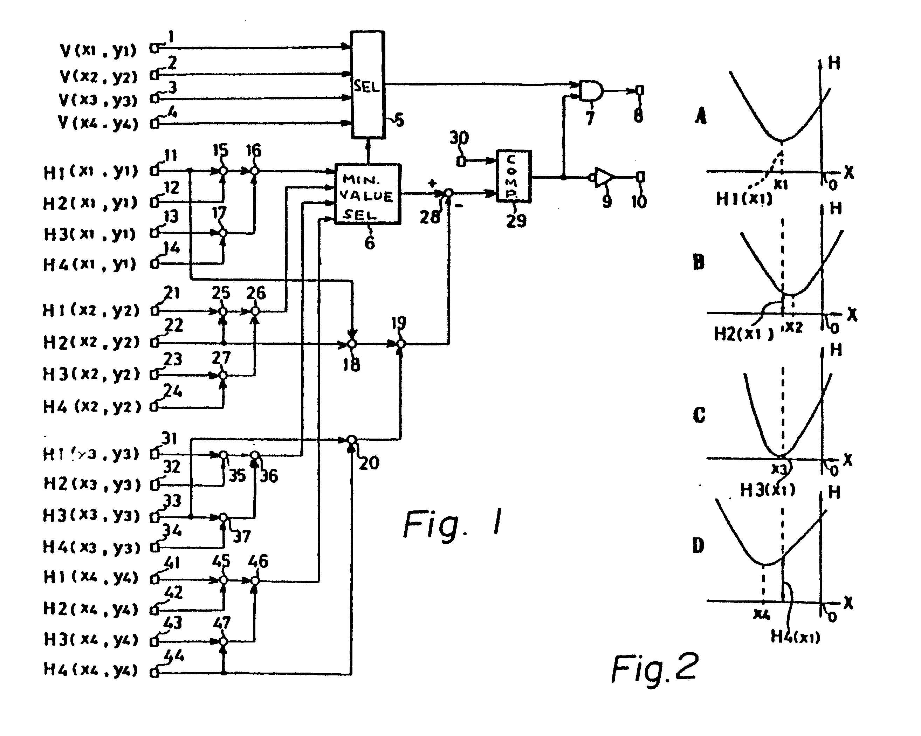

The embodiment of the present invention will now be described in detail. In this embodiment, the image of one field is notionally divided into four segments, and the movement vector having the highest reliability is selected from the respective movement vectors obtained for each segment. In Figure 1, movement vectors $V(x_1, y_1)$, $V(x_2, y_2)$, $V(x_3, y_3)$ and $V(x_4, y_4)$ obtained for the respective segments are supplied to input terminals 1, 2, 3 and 4, respectively.

The detection of these movement vectors will now be explained with reference to Figures 3, 4 and 5. Referring first to Figure 3, a television signal derived by a television camera is digitised and supplied to an input terminal 50. The digital television signal is supplied to a representative pixel (or point) extracting circuit 51 and a block data extracting circuit 52. Pixel data of the representative pixel obtained as an output of the pixel extracting circuit 51 are supplied to a representative pixel memory 53. The pixel data of the representative pixel read out from the memory 53 are the data in the previous frame.

The block data extracting circuit 52 extracts the pixel data for every block included in the current frame and supplies them to a subtracter 54. The difference between the magnitude of the pixel data of the representative pixel in the current frame and of the representative pixel in the previous frame with respect to each pixel in the block, namely the frame difference data is obtained by the subtracter 54. These frame difference data are supplied to a converter 55 and are converted into a magnitude (or absolute value).

As an example, as shown in Figure 4, one block has a size such that there are thirty-two samples in the horizontal direction and eight lines in the vertical direction. Therefore, 256 pixels are contained in one block. The representative pixel is the pixel data which are located at the spatial centre of the block.

The magnitude of the frame difference data from the converter 55 is supplied to a summation circuit 56. The summation value of the frame difference data is supplied to a switching circuit 57. As shown in Figure 5, the frame difference data are obtained for each of the segments 71A, 71B, 71C and 71D formed by notionally dividing the image 70 of one field into four segments. The summation value of the frame difference data from the summation circuit 56 is distributed to respective memories 61,62,63 and 64 for each segment 71A, 71B, 71C and 71D respectively by the switching circuit 57. The memory 61 is a memory having a capacity of one block, to store the summation value (frame difference summation data) of the magnitude of the frame difference data of each block included in the segment 71A. The memories 62, 63 and 64 likewise store the respective frame difference summation data for each of the segments 71B, 71C and 71D.

The frame difference summation data stored in the respective memories 61 to 64 are supplied to a movement vector detecting circuit 65. The movement vector of each segment 71A to 71D is detected from the minimum value of the frame difference summation data. This minimum value and the frame difference summation data in the memories 61 to 64 are supplied to a selection reference generator 66. A selection signal to select the movement vector having the highest reliability from the four movement vectors is generated by the selection reference generator 66. A selecting circuit 67 is controlled by this selection signal, so that the movement vector of one field is derived from an output terminal 68.

Each of the memories 61 to 64 has two memory banks to process the digital television signal supplied in real time. In the field in which the frame difference summation data are written in one of those memory banks, the frame difference summation data are read out from the other memory bank and at the same time the movement vector is detected and selected.

As indicated by solid lines in Figure 5, the case where the respective movement vectors in the segments 71A to 71D become identical is ideal. However, in practice the degree of reliability of the movement vectors derived for each segment differ in dependence on the nature of the pictures in an image (in particular in dependence on pictures of mainly low frequency and mainly high frequency content) or on the influence of moving objects in the image. In addition, in Figure 5, the movement vectors indicated by broken lines are the movement vectors obtained when the television camera zooms in. In this case, the four movement vectors spread radially from the centre.

The selection reference generator 66 and the selecting circuit 67 in Figure 3 have an arrangement as shown in Figure 1. The respective movement vectors of the segments 71A to 71D which are supplied to the respective input terminals 1 to 4 in Figure 1 are formed by the movement vector detecting circuit 65. The coordinates $(x_1, y_1)$, $(x_2, y_2)$, $(x_3, y_3)$ and $(x_4, y_4)$ represent the positions of the minimum values in the distributions of the frame difference summation data in the memories 61 to 64, respectively.

In Figure 1, frame difference summation data $H1(x_1, y_1)$, $H2(x_1, y_1)$, $H3(x_1, y_1)$ and $H4(x_1, y_1)$ are respectively supplied to input terminals 11, 12, 13 and 14. $H1(x_1, y_1)$ indicates the minimum value in the table of the frame difference summation data of the segment 71A. This minimum value shows the value of the residual deviation after the movement correction using the movement vector $V1(x_1, y_1)$ of the segment 71A. $H2(x_1, y_1)$. $H3(x_1, y_1)$ and $H4(x_1, y_1)$ denote the residual deviations after the respective movement corrections in which the movement vector $V1(x_1, y_1)$ is applied to the segments 71B, 71C and 71D. As shown in Figure 2, only the direction of the X axis, that is one dimension, will be considered for simplicity.

By converting the digital data into analog data, the distribution with respect to the X axis passing through the position of the minimum value of the frame difference summation data of the segment 71A stored in the memory 61 can be expressed as shown in Figure 2A. In Figure 2, the ordinate axis indicates the magnitude of the value of the frame difference summation data.

Similarly, the distribution with respect to the X axis direction of the frame difference summation data of the segments 71B, 71C and 71D respectively are shown in Figures 2B, 2C and 2D. The states of the distributions of the frame difference summation data shown in Figure 2 as examples, namely, the positions of the minimum values, the gradients between the minimum values and the frame difference summation data thereabound, and the values of the minima (residual deviations) differ slightly from segment to segment.

In Figures 2B, 2C and 2D, the respective frame difference summation data $H2(x_1)$, $H3(x_1)$ and $H4(x_1)$ of the other segments 71B, 71C and 71D at the position $(x_1)$ in the X axis direction of the minimum value of the segment 71A are shown. These frame difference summation data are added by adders 15, 16 and 17 and supplied to a minimum value selecting circuit 6.

Frame difference summation data $H1(x_2, y_2)$,

$H2(x_2, y_2)$, $H3(x_2, y_2)$ and $H4(x_2, y_2)$ are respectively supplied to input terminals 21, 22, 23 and 24. The data $H2(x_2, y_2)$ are the minimum value of the frame difference summation data of the segment 71B. The data $H1(x_2, y_2)$, $H3(x_2, y_2)$ and $H4(x_2, y_2)$ are the respective frame difference summation data of the segments 71A, 71C and 71D at the same position as the position of the minimum value of the segment 71B. The frame difference summation data from the input terminals 21 to 24 are added by adders 25, 26 and 27 and supplied to the minimum value selecting circuit 6.

Frame difference summation data $H1(x_3, y_3)$, $H2(x_3, y_3)$, $H3(x_3, y_3)$ and $H4(x_3, y_3)$ are respectively supplied to input terminals 31, 32, 33 and 34. The data $H3(x_3, y_3)$ is the minimum value of the frame difference summation data of the segment 71C. The data $H1(x_3, y_3)$, $H2(x_3, y_3)$ and $H4(x_3, y_3)$ are the respective frame difference summation data of the segments 71A, 71B and 71D at the same position as the position of the minimum value of the segment 71C. The frame difference summation data from the input terminals 31 to 34 are added by adders 35, 36 and 37 and supplied to minimum value selecting circuit 6.

Frame difference summation data $H1(x_4, y_4)$, $H2(x_4, y_4)$, $H3(x_4, y_4)$ and $H4(x_4, y_4)$ are respectively supplied to input terminals 41, 42, 43 and 44. The data $H4(x_4, y_4)$ are the minimum value of the frame difference integration data of the segment 71D. The data $H1(x_4, y_4)$, $H2(x_4, y_4)$ and $H3(x_4, y_4)$ are respectively the frame difference summation data of the segments 71A, 71B and 71C at the same position as the position of the minimum value of the segment 71D. The frame difference summation data from the input terminals 41 to 44 are added by adders 45, 46 and 47 and supplied to the minimum value selecting circuit 6.

The selecting circuit 6 selects and supplies the minimum addition output from the above-mentioned four addition outputs. At the same time, the selecting circuit 6 detects which addition output is the minimum and generates a selection signal to control a selecting circuit 5 on the basis of the result of this detection. Namely, the movement vector in which the residual deviation is a minimum is selected by the selecting circuit 5 from the four cases; where the movement vector of the segment 71A is applied to not only the segment 71A, but also to the other segments 71B, 71C and 71D; where the movement vector of the segment 71B is applied to not only the segment 71B, but also to the other segments 71A, 71C and 71D; where the movement vector of the segment 71C is applied to not only the segment 71C, but also the other segments 71A, 71B and 71D; and where the movement vector of the segment 71D is applied to not only the segment 71D, but also to the other segments 71A, 71B and 71C.

Due to this, the minimum value selecting circuit 6 derives a selection signal to select the movement vector of the segment where the gradient of the distribution of the frame difference summation data is steep. This is because the value of the frame difference summation data of the segment where the gradient towards the minimum value is steep becomes large, even if the position is slightly deviated from the position of the minimum value.

In Figure 1, adders 18, 19 and 20 serve to calculate the sum of the minimum values $H1(x_1, y_1)$ to $H4(x_4, y_4)$ of the respective frame difference summation data of the segments 71A to 71D. This sum is supplied to a subtracter 28, by which the sum is subtracted from the minimum value selected by the selecting circuit 6. An output of the subtracter 28 is supplied to a comparator 29 and is compared with a threshold value from a terminal 30.

An output signal which becomes of high level when the output of the subtracter 28 is smaller than the threshold value is supplied from the comparator 29. On the contrary, an output signal which becomes of low level when the output of the subtracter 28 is larger than the threshold value is supplied from the comparator 29. The former relation means that there is not a large difference between the distributions of the frame difference integration data of the segments 71A to 71D, and accordingly the movement vector which is supplied from the selecting circuit 5 is reliable. In this case, the movement vector from the selecting circuit 5 is derived from an output terminal 8 through an AND gate 7. At the same time, a discrimination signal which was set at a low level by an inverter 9 is supplied from an output terminal 10.

On the other hand, the latter relation such that the output of the subtracter 28 is larger than the threshold value denotes that the frame difference summation data of the segments 71A to 71D are not so completely coincident, and therefore the movement vector which is supplied from the selecting circuit 5 is not reliable. In this case, derivation of the movement vector from the selecting circuit 5 is inhibited by the AND gate 7. At the same time, the discrimination signal at a high level is supplied from the output terminal 10. This high level discrimination signal represents that the movement vector has not been determined.

The movement vector from the selecting circuit 5 indicates the movement of the television camera. Upon band compression transmission of a high quality television signal, the movement vector is also transmitted and movement correction is performed on the reception side in dependence on the movement vector.

## Claims

1. A method of selecting a movement vector in a video system for transmitting picture data comprising a succession of video frames each formed of a plurality of pixels, the method comprising:

dividing each of said video frames into m video frame segments;

deriving m movement vectors comprising a movement vector for each of m pairs of said video frame segments wherein each of said pairs comprises one of said segments of a current one of the frames and the corresponding one of said segments of a previous one of the frames;

deriving a plurality of frame difference values for each of said pairs by comparing a single pixel of the segment of said previous frame with each pixel in the respective segment in said current frame;

selecting a minimum value of frame difference data for each of said pairs and forming added minimum values by adding said selected minimum value for one of said pairs to a value of the frame difference data at a corresponding location in each of the other ones of said pairs, and performing said step of adding for each one of said pairs to produce m residual deviation values; and

selecting the one of said m movement vectors corresponding to the selected minimum value, subtracting said added minimum values from the minimum value of the m residual deviation values, comparing the subtracted output with a predetermined reference value, and outputting said selected movement vector when said subtracted output is smaller than said predetermined reference value.

2. Apparatus for selecting a movement vector in response to frame difference data between a present frame and a previous frame of a video signal, the apparatus comprising:

means for dividing each frame of said video signal into m video signal area segments;

means (56) for producing frame difference summation data in response to present frame data and previous frame data for each m pairs of said segments wherein each pair comprises one of said segments of said previous frame and the corresponding one of said segments of said present frame;

means (61 to 65) responsive to said frame difference summation data for said pairs for producing m respective movement vectors, each of said m movement vectors representing an amount and a direction of movement of an image represented by a respective one of said pairs;

means (15 to 17, 25 to 27, 35 to 37, 45 to 47) for forming added minimum values by adding a minimum value of the frame difference data for all of said pairs with a value of the frame difference data at a corresponding location in each of the other ones of said pairs, for each one of said m segments, to produce m residual deviation values;

means (6) for detecting a minimum value of said m residual deviation values;

means (5) for selecting the one of said m movement vectors corresponding to said detected minimum residual deviation value; and

a control circuit (28, 29, 7) for controlling output of said one selected movement vector from said apparatus, said control circuit (28, 29, 7) comprising a circuit (28) for subtracting said added minimum values from the minimum value of the m residual deviation values and producing a subtracted output, a comparator (29) for comparing the subtracted output with a predetermined reference value, and a circuit (7) for outputting the selected movement vector when said subtracted output is smaller than said predetermined reference value.

3. Apparatus according to claim 2 wherein said circuit (7) for outputting the selected movement vector is an AND gate circuit (7).

4. A method according to claim 1 or an apparatus according to claim 2 or claim 3 wherein m equals four.

**Revendications**

1. Procédé de sélection d'un vecteur déplacement dans un système vidéo pour transmettre des données d'image comprenant une succession d'images vidéo, chacune étant formée d'une pluralité de pixels, le procédé comprenant :

la division de chacune des images vidéo en m segments d'image vidéo ;

la déduction de m vecteurs déplacement pour obtenir un vecteur déplacement pour chacune des m paires de segments d'image vidéo, chacune de ces paires comprenant l'un des segments d'une des images courantes et l'un des segments correspondant d'une des images précédentes ;

la déduction d'une pluralité de valeurs de différences d'images pour chacune de ces paires, en comparant un unique pixel du segment de l'image précédente à chaque pixel du segment respectif de l'image courante ;

la sélection d'une valeur minimum de données de différences d'images pour chacune de ces paires et l'obtention de valeurs minimum additionnées par addition de cette valeur minimum sélectionnée pour une des paires à une valeur des données de différences d'images selon un emplacement correspondant pour chacune des autres paires et par réalisation de l'étape d'addition pour chacune de ces paires pour produire m valeurs de déviation résiduelle ; et

la sélection de l'un des m vecteurs déplacement qui correspond à la valeur minimum sélectionnée, la soustraction des valeurs minimum additionnées de la valeur minimum des m valeurs de déviation résiduelle, la comparaison du résultat de la soustraction avec une valeur de référence prédéterminée et la sortie du vecteur déplacement sélectionné lorsque le résultat de la soustraction est inférieur à la valeur de référence prédéterminée.

2. Dispositif pour sélectionner un vecteur déplacement en réponse à des données de différences d' images entre une image courante et une image précédente d'un signal vidéo, le dispositif comprenant :

un moyen pour diviser chaque image du signal vidéo en m segments de surface du signal vidéo ;

un moyen (56) pour produire des données de sommation de différences d'images en réponse aux données d'image courante et aux données de trame précédente pour chacune des m paires de segments, chaque paire comprenant un des segments de l'image précédente ainsi qu'un des segments correspondant de l'image courante ;

un moyen (61 à 65) sensible aux données de sommation de différences d'images pour ces paires afin de produire respectivement m vecteurs déplacement, chacun de ces m vecteurs déplacement représentant une quantité et une direction de mouvement d'une image représentée par une des paires respectives ;

un moyen (15 à 17, 25 à 27, 35 à 37, 45 à 47) pour obtenir des valeurs minimum additionnées par addition d'une valeur minimum des données de différences d'images pour l'ensemble des paires à une valeur des données de différences d'images selon un emplacement correspondant dans chacune des autres paires, et ce pour chacun des m segments, afin de produire m valeurs de déviation résiduelle ;

un moyen (6) pour détecter une valeur minimum des m valeurs de déviation résiduelle ;

un moyen (5) pour sélectionner l'un des m vecteurs déplacement qui corresponde à la valeur de déviation résiduelle minimum détectée ; et

un circuit de commande (28, 29, 7) pour commander la sortie du vecteur déplacement sélectionné depuis le dispositif, ce circuit de commande (28, 29, 7) comprenant un circuit (28) pour soustraire les valeurs minimum additionnées de la valeur minimum des m valeurs de déviation résiduelle et pour produire un résultat de cette soustraction, un comparateur (29) pour comparer le résultat de la soustraction à une valeur de référence prédéterminée et un circuit (7) pour sortir le vecteur déplacement sélectionné lorsque la sortie obtenue par soustraction est inférieure à la valeur de référence prédéterminée.

3. Dispositif selon la revendication 2, dans lequel le circuit (7) pour sortir le vecteur déplacement sélectionné est un circuit de porte ET (7).

4. Procédé selon la revendication 1 ou dispositif selon la revendication 2 ou 3, dans lequel m est égal à quatre.

**Ansprüche**

1. Verfahren zum Auswählen eines Bewegungsvektors in einem Videosystem zum Übertragen von Bilddaten, die eine Aufeinanderfolge von Videoteilbildern umfassen, wovon jedes aus einer Vielzahl von Bildpunkten gebildet ist, welches Verfahren Schritte umfaßt zum
   - Unterteilen jedes der Videoteilbilder in m Video-Teilbildsegmente,
   - Ableiten von m Bewegungsvektoren, die einen Bewegungsvektor für jedes von m Paaren der Video-Teilbildsegmente umfassen, wobei jedes dieser Paare eines der Segmente eines augenblicklichen der Teilbilder und des korrespondierenden der Segmente eines vorhergehenden der Teilbilder umfaßt,
   - Ableiten einer Vielzahl von Teilbild-Differenzwerten für jedes der Paare durch Vergleichen eines einzelnen Bildpunkts des Segments des vorhergehenden Teilbilds mit jedem Bildpunkt in dem betreffenden Segment in dem augenblicklichen Teilbild,
   - Auswählen eines Minimalwerts von Teilbild-Differenzdaten für jedes der Paare und Bilden von addierten Minimalwerten durch Addieren des ausgewählten Minimalwerts für eines der Paare zu einem Wert der Teilbild-Differenzdaten an einem korrespondierenden Ort in jedem der anderen der Paare sowie Durchführen des Schrittes zum Addieren für jedes der Paare, um m Restabweichungswerte zu erzeugen, und
   - Auswählen des einen der m Bewegungsvektoren, welcher mit dem ausgewählten Minimalwert korrespondiert, Subtrahieren der addierten Minimalwerte von dem Minimalwert der m Restabweichungswerte, Vergleichen des subtrahierten Ausgangssignals mit einem vorbestimmten Referenzwert sowie Ausgeben des ausgewählten Bewegungsvektors, wenn das subtrahierte Ausgangssignal kleiner als der vorbestimmte Referenzwert ist.

2. Vorrichtung zum Auswählen eines Bewegungsvektors in Reaktion auf Teilbild-Differenzdaten für Differenzen zwischen einem augenblicklichen Teilbild und einem vorhergehenden Teilbild eines Videosignals, welche Vorrichtung umfaßt:
   - ein Mittel zum Unterteilen jedes Teilbildes des Videosignals in Videosignal-Bereichssegmente,
   - ein Mittel (56) zum Erzeugen von Teilbild-Differenzsummationsdaten in Reaktion auf augenblickliche Teilbilddaten und vorhergehende Teilbilddaten für jedes von m Paaren der Segmente, wobei jedes Paar eines der Segmente des vorhergehenden Teilbildes und das korrespondierende der Segmente des augenblicklichen Teilbildes umfaßt,
   - Mittel (61 bis 65), die auf die Teilbild-Differenzsummationsdaten für die Paare ansprechen, zum Erzeugen von m betreffenden Bewegungsvektoren, wobei jeder der m Bewegungsvektoren einen Betrag und eine Richtung einer Bewegung eines Bildes repräsentiert, das durch ein betreffendes der Paare repräsentiert ist,
   - Mittel (15 bis 17, 25 bis 27, 35 bis 37, 45 bis 47) zum Bilden addierter Minimalwerte durch Addieren eines Minimalwerts der Teilbild-Differenzdaten für alle der Paare zu einem Wert der Teilbild-Differenzdaten an einem korrespondierenden Ort in jedem der anderen der Paare für jedes der m Segmente, um m Restabweichungswerte zu erzeugen,

- ein Mittel (6) zum Erfassen eines Minimalwerts der m Restabweichungswerte,
- ein Mittel (5) zum Auswählen des einen der m Bewegungsvektoren, der mit dem erfaßten minimalen Restabweichungswert korrespondiert, und
- eine Steuerschaltungsanordnung (28, 29, 7) zum Steuern der Ausgabe des einen ausgewählten Bewegungsvektors aus der Vorrichtung, wobei die Steuerschaltungsanordnung (28, 29, 7) umfaßt: eine Schaltung (28) zum Subtrahieren der addierten Minimalwerte von dem Minimalwert der m Restabweichungswerte und zum Erzeugen eines subtrahierten Ausgangssignals, einen Komparator (29) zum Vergleichen des subtrahierten Ausgangssignals mit einem vorbestimmten Referenzwert sowie eine Schaltung (7) zum Ausgeben des ausgewählten Bewegungsvektors, wenn das subtrahierte Ausgangssignal kleiner als der vorbestimmte Referenzwert ist.

3. Vorrichtung nach Anspruch 2, bei der die Schaltung (7) zum Ausgeben des ausgewählten Bewegungsvektors eine UND-Gatterschaltung (7) ist.

4. Verfahren nach Anspruch 1 oder Vorrichtung nach Anspruch 2 oder 3, wobei m = 4 ist.

Fig.2

Fig. 1

Fig. 3

Fig.4

Fig. 5